# EUROPEAN PATENT SPECIFICATION

(11) **EP 1 277 983 B1**
(45) Date of publication and mention of the grant of the patent: **14.12.2005**
(21) Application number: 02015644.4
(22) Date of filing: 16.07.2002
(51) Int. Cl.: F16D 69/02, B62L 1/00, F16D 65/12

(54) **Brake device & method using Ni-W alloy plating**
Bremsvorrichtung und Methode die Ni-W Legierungsplattierung verwenden
Dispositif de freinage et méthode utilisant une couche de placage en alliage Ni-W

(30) Priority: 16.07.2001 JP 2001215295
(43) Date of publication of application: 22.01.2003
(73) Proprietor: SHIMANO INC., Sakai-shi, Osaka (JP)
(72) Inventor: Yasutaka, Okada, Nara-shi, Nara (JP); Masaaki, Hara, Ikoma-gun, Nara (JP); Mitsuyo, Maeda, Sakai-shi, Osaka (JP)
(74) Representative: GROSSE BOCKHORNI SCHUMACHER

(56) References cited:
- EP-A- 0 100 888
- DE-A- 4 321 713
- GB-A- 554 540
- US-A- 4 308 153

## Description

### BACKGROUND OF THE INVENTION

The present invention is directed to braking devices and, more particularly, to a braking member and to a method of manufacturing such a braking member.

Braking devices for braking a moving object such as a vehicle or the like by means of frictional force are generally equipped with a moving member that moves with the object and a friction member which applies a braking force by pressing against the moving member. For example, a vehicle disk brake ordinarily comprises a metal disk rotor that rotates integrally with the vehicle wheel, and brake pads that can be pressed against the disk rotor. A vehicle drum brake ordinarily comprises a brake drum that rotates integrally with the vehicle wheel, and brake shoes that can be pressed against the brake drum.

Generally, in the case of braking devices that operate using frictional force, it is important to suppress so-called fading, in which the braking force drops because of heat generated by friction. Conventional methods used to reduce such fading include enhancing heat dissipation characteristics of the braking device by modifying the material or shape of friction members such as brake pads, brake shoes or the like; enhancing heat dissipation characteristics of the braking device by using a carbon or ventilated type disk rotor, and by preventing the temperature of metal moving members from rising to a level where fading occurs. However, in the case of severe operating conditions such as those encountered in bicycle downhill racing, a rise in the temperature of the moving members cannot be prevented using such conventional countermeasures. As a result, fading cannot be sufficiently suppressed under such harsh conditions.

Another problem with conventional braking devices is a drop in the braking force due to wetting of the disk rotor or brake drum by water. More specifically, when such wetting with water occurs and the water adheres to the frictional members or to the moving member, then the frictional force drops, thus leading to a drop in the braking force.

Document D2 DE 4321713 A1 discloses a composite disc brake rotor and a process for its manufacture. The cover of the disc break is comprised of a self-lubricating thermal conducting cover which increases the wear resistance of the disc break arrangement. The friction surface of this disc break is made of steel, and the layer arrangement of the disc break may include a nickel alloy as a thermal barrier.

### SUMMARY OF THE INVENTION

The present invention is directed to a braking member and to a method of manufacturing such a braking member, wherein the braking member exhibits better braking characteristics than conventional braking members. Such a braking member may have better braking characteristics under high temperature and/or wet conditions, for example.

In one embodiment of the present invention, a braking member having a friction surface includes a matrix and a nickel-tungsten alloy layer disposed between the matrix and the friction surface. If desired, the nickel-tungsten alloy layer may form the friction surface. In a more specific embodiment, the braking member may include an additional nickel or copper layer, and such a layer may be disposed between the nickel-tungsten alloy layer and the matrix. A further metal layer may be disposed between the nickel-tungsten alloy layer and the friction surface. If desired, the further metal layer may be an elemental or alloy layer selected from the group comprising Sn, Cu, Zn, Ni, Ag, Fe, Al, P, Mn, Bi and Cr, and the further metal layer may form the friction surface.

In another embodiment of the present invention, a method of making a braking member having a friction surface comprises the steps of providing a matrix of the braking member and forming a nickel-tungsten alloy layer between the matrix and the friction surface. If desired, the nickel-tungsten alloy layer may form the friction surface. In a more specific embodiment, an additional nickel or copper layer may be formed on the braking member, and such a layer may be disposed between the nickel-tungsten alloy layer and the matrix. A further metal layer may be formed between the nickel-tungsten alloy layer and the friction surface. If desired, the further metal layer may be an elemental or alloy layer selected from the group comprising Sn, Cu, Zn, Ni, Ag, Fe, Al, P, Mn, Bi and Cr, and the further metal layer may form the friction surface.

### BRIEF DESCRIPTION OF THE DRAWINGS

Fig. 1 is a side view of a front portion of a bicycle that includes a particular embodiment of a braking device according to the present invention;
Fig. 2 is a side view of the disk rotor attached to the bicycle;
Fig. 3 is an exploded view of the brake caliper;
Fig. 4 is a plan view of the brake control device;
Fig. 5 is a mechanical schematic diagram of the braking device;
Fig. 6 is a cross-sectional view taken along line A-A in Fig. 2 showing a particular embodiment of a braking member according to the present invention;
Fig. 7 is a flow chart illustrating the manufacturing process for the braking member shown in Fig. 6;
Fig. 8 is a cross-sectional view taken along line A-A in Fig. 2 showing another embodiment of a braking member according to the present invention;
Fig. 9 is a flow chart illustrating the manufacturing process for the braking member shown in Fig. 8;
Fig. 10 is a cross-sectional view taken along line A-A in Fig. 2 showing another embodiment of a braking member according to the present invention;
Fig. 11 is a flow chart illustrating the manufacturing process for the braking member shown in Fig. 10;
Fig. 12 is a cross-sectional view taken along line A-A in Fig. 2 showing another embodiment of a braking member according to the present invention;
Fig. 13 is a flow chart illustrating the manufacturing process for the braking member shown in Fig. 12;
Fig. 14 is a cross-sectional view taken along line A-A in Fig. 2 showing another embodiment of a braking member according to the present invention;
Fig. 15 is a flow chart illustrating the manufacturing process for the braking member shown in Fig. 14; and
Fig. 16 is a table showing the results of experiments made using conventional braking members and braking members constructed according to the present invention.

### DETAILED DESCRIPTION OF THE EMBODIMENTS

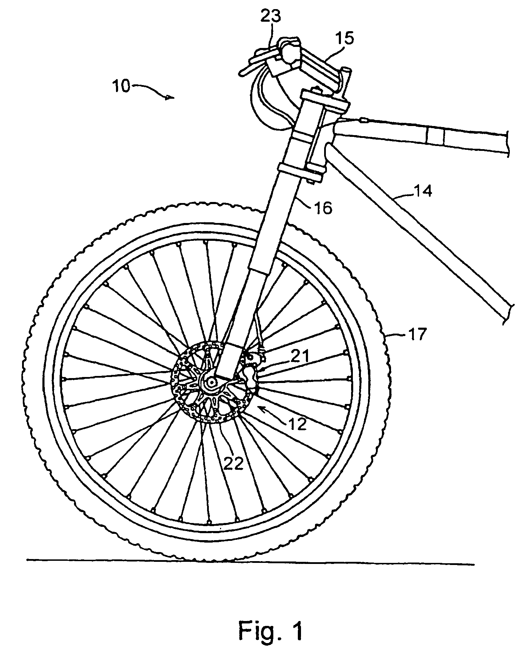

Fig. 1 is a side view of a front portion of a bicycle 10 that includes a particular embodiment of a braking device 12 (e.g., a disk braking device) according to the present invention. Bicycle 10 is a conventional universally known bicycle, and it comprises a bicycle frame 14 which has handlebars 15, front and rear forks 16 (only the front fork is shown in the figures), front and rear wheels 17 (only the front wheel is shown in the figures), and a driving device that includes sprockets and a chain (not shown).

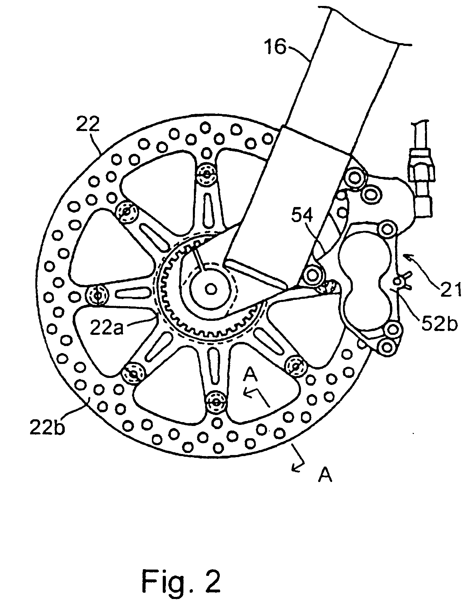

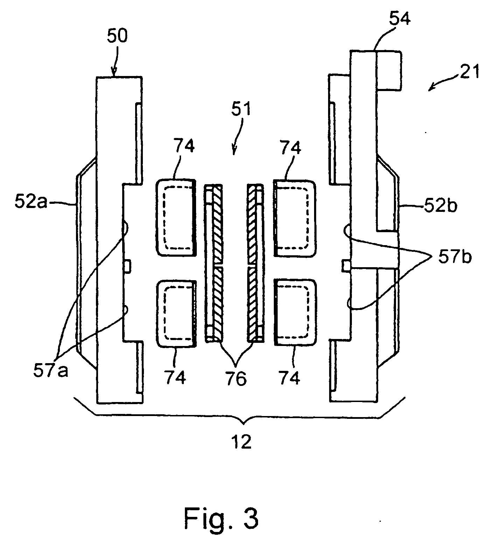

The disk braking device 12 comprises a brake caliper 21 mounted on the front fork 16 (which is equipped with a double crown type suspension), a disk rotor 22 and a brake actuating mechanism 23.The brake caliper 21 is attached to the front fork 16 of the bicycle 10 in a position that is in close proximity to the disk rotor 22 so that the caliper 21 can apply a frictional force to the disk rotor 22 to stop the rotation of the disk rotor 22. As shown in Figs. 2 and 3, the brake caliper 21 is equipped with a housing 50 and a piston unit 51. The housing 50 is constructed from a heat-conducting material such as an aluminum alloy or the like, and it comprises a first housing member 52a and a second housing member 52b that are joined together by bolts (not shown). Both housing members 52a and 52b have substantially the same shape. Furthermore, the second housing member 52b has a flange that extends outward and forms an attachment member 54 that is used to fasten the brake caliper 21 to the front fork 16 by means of bolts. When housing members 52a and 52b are assembled together, a brake slot is formed between the two housing members, and the disk rotor 22 can be accommodated in this brake slot.

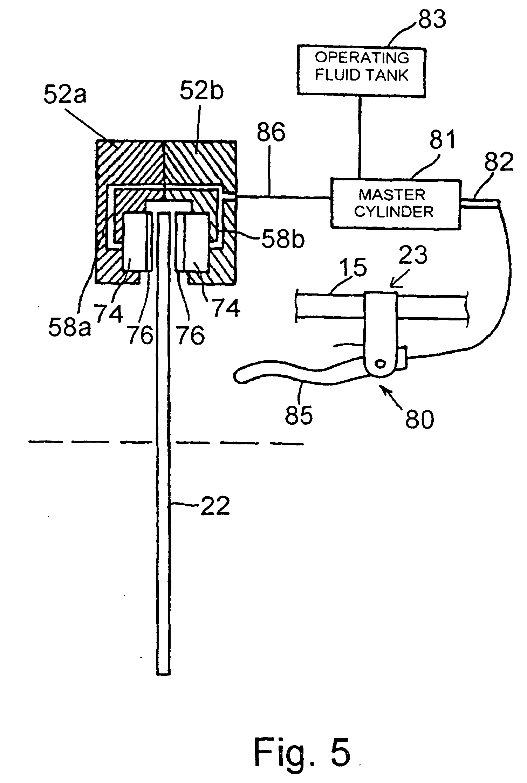

As shown in Figs. 3 and 5, circular cylinder parts 57a and 57b, each of which accommodates two pistons 74, and oil passages 58a and 58b which are used to supply brake oil to the respective cylinder parts 57a and 57b, are formed in the two housing members 52a and 52b. The hydraulic piping 86 of the brake actuating mechanism 23 is connected to the second housing member 52b so that brake oil is supplied to both housing members 52a and 52b.Thus, brake oil supplied from the brake actuating mechanism 23 flows into the second housing member 52b and into the oil passages 58a and 58b so that the piston unit 51 is actuated.

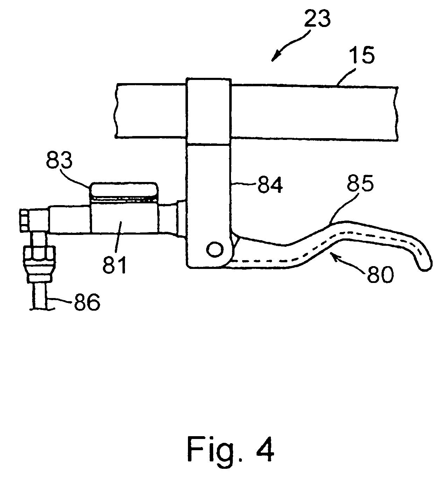

As is shown in Figs. 4 and 5, the brake actuating mechanism 23 is integrally attached to the right-end portion of the handlebars 15. Brake actuating mechanism 23 includes a brake lever assembly 80, a master cylinder 81, a master piston 82, an oil tank 83, a bracket 84, and a lever part 85. Bracket 84 is mounted on the handlebars 15, and lever part 85 is mounted on bracket 84 so that lever part 85 freely pivots between the braking position and the brake release position. Master cylinder 81 is molded as an integral part of bracket 84, and the master piston 82 and oil tank 83 are supported by bracket 84 so that master piston 82 can move through the master cylinder 81. More specifically, oil tank 83 is attached to the master cylinder 81 and communicates with the interior bore of the master cylinder 81 so that oil tank 83 supplies an operating fluid to the master cylinder 81. One end of master piston 82 is connected to the lever part 85 so that master piston 82 moves axially through master cylinder 81 in response to movement of lever part 85. As a result, hydraulic fluid is fed into the hydraulic piping 86 that is connected to the brake caliper 21 for actuating piston unit 51.

As shown in Fig. 3, the piston unit 51 has four pistons 74 and a pair of brake pads 76. The pistons 74 are fit into the pair of cylinder parts 57a and 57b so that the pistons 74 slide freely between a brake release position and a braking position. The brake pads 76 are disposed at the outside ends of the pistons 74 and move as a unit with the pistons 74. Thus, when the pistons 74 move from the brake release position to the braking position, the brake pads 76 also move from the braking release position to the braking position. When the brake pads 76 are in the braking position, they frictionally clamp the disk rotor 22 to brake the front wheel 17. When the brake pads 76 are in the brake release position, they are separated from the disk rotor 22 so that the disk rotor 22 can rotate freely.

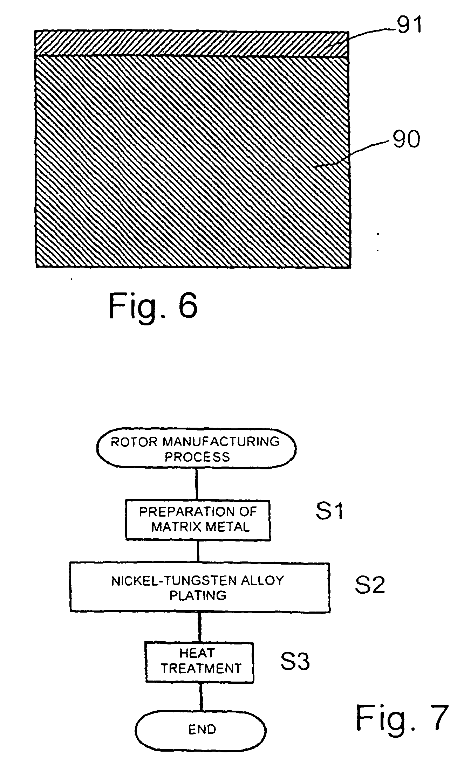

The disk rotor 22 is fastened to the hub of the front wheel 17 and rotates integrally with it. As is shown in Fig. 2, the disk rotor 22 is a disk-shaped member that is made of (for example) a stainless steel alloy. In this disk rotor 22, a centrally positioned hub attachment part 22a and a ring-form rotor part 22b, which forms the outer circumferential friction surface, are molded as an integral unit. As is shown in Fig. 6, a nickel-tungsten alloy plating layer 91 is formed on the surface of a stainless steel matrix material 90 of the disk rotor 22. It is desirable that the thickness of this nickel-tungsten alloy layer 91 be in the range of from approximately 0.5 µm to approximately 100 µm. Such a thickness range prevents excessive plating costs of a thick layer and peeling off as a result of frictional forces on a thin layer. There are no particular restrictions on the composition of the nickel-tungsten alloy plating. However, an additional effect can be expected if the proportion of tungsten in the plating is 20 wt % to 80 wt %. Accordingly, such a composition is desirable.

In this embodiment, the nickel-tungsten alloy layer 91, which may form the outermost surface, is subject to a heat treatment at 400°C to 700°C. Such a heat treatment improves the frictional force at high temperatures. It is surmised that the probable reason for this is that the effect of the nickel-tungsten alloy plating in increasing the frictional force at high temperatures is enhanced by this heat treatment. An even more superior effect on the braking force at high temperatures is shown if a heat treatment is performed in the temperature region of 450°C to 650°C, preferably 500°C to 600°C. Thus, by forming a nickel-tungsten alloy layer 91 on the surface of the disk rotor 22, the braking force tends not to drop even under harsh conditions in the temperature range from 400°C to 700°C, where fading ordinarily occurs. Furthermore, wear on the side of the brake pads 76 is reduced compared to that of conventional brakes, so that the useful life of the brake pads 76 is also extended. The heat treatment step may be performed during or after the formation of the nickel-tungsten alloy layer on the pressing contact surfaces (friction surfaces) of the braking device. The heat treatment method that is used may be a method in which heating is accomplished using a vacuum furnace, atmospheric furnace, gas furnace, salt bath furnace, high-frequency heating apparatus or a combination of these means. There are no restrictions on the heating rate, uniform temperature maintenance time or cooling rate.

Fig. 7 is a flow chart illustrating the manufacturing process for the disk rotor 22 shown in Fig. 6. The matrix material 90 which is formed into the shape of the disk rotor 22 is prepared in a step S1 by (for example) stamping a plate-shaped material made of a stainless steel alloy. Next, nickel-tungsten alloy plating is performed on the prepared matrix material 90 in a step S2 so that a nickel-tungsten alloy plating layer 91 is formed. Then, the surface of the nickel-tungsten alloy layer 91 is subjected to a heat treatment at 400°C to 700°C in a step S3 by means of an appropriate heating apparatus.

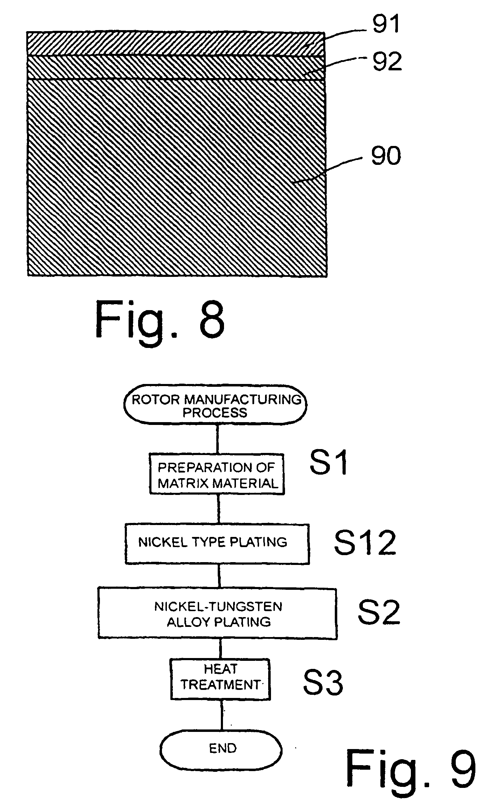

In the above embodiment, only a nickel-tungsten alloy layer 91 was formed on the surface of the matrix material 90 of the disk rotor 22. However, it would also be possible to form a nickel-type plating layer 92 on the surface of the matrix material 90, and to form a nickel-tungsten alloy layer 91 on the surface of this nickel type layer 92 as shown in Fig. 8. The insertion of a relatively soft nickel-type layer 92 between the matrix material 90 and the nickel-tungsten alloy layer 91 produces a gradient effect in which the hardness gradually increases. Accordingly, the stress of the nickel-tungsten alloy layer itself can be dispersed so that the durability against peeling can be improved. The nickel-type layer may consist of Ni alone, or may be an alloy of Ni with P, Sn or the like.

Fig. 9 is a flow chart illustrating the manufacturing process for the disk rotor 22 shown in Fig. 8. The process is the same as that shown in Fig. 7 for the first embodiment, except a nickel-type plating treatment is added in step S12 following the preparatory step S1 shown in Fig. 7.

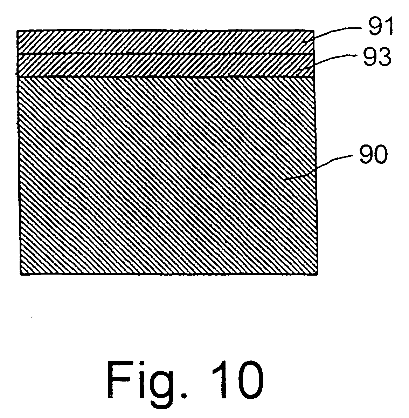

Fig. 10 is a cross-sectional view of another embodiment of a braking member such as disk rotor 22. As shown in Fig. 10, it would also be possible to form a copper-type plating layer 93 on the surface of the matrix material 90, and to form a nickel-tungsten alloy layer 91 on the surface of this copper-type layer 93. Here, the copper-type layer 93 may comprise Cu alone, or may be an alloy layer constructed from Cu with one or more metals selected from a group consisting of Zn, Sn and Ni.

In this case, since a soft copper-type layer 93 is inserted between the matrix material 90 and the nickel-tungsten alloy plating layer 91, superior controllability is obtained in the braking device. Here, the term "controllability" refers to the ease of controlling the braking device during deceleration or stopping, and it refers in particular to the ease of control when the disk braking device 12 is operated by a human being. It is surmised that the probable reason for this is that the copper-type layer 93 produces an enhanced feedback effect so that minute transmitted information such as slight vibrations from the braking surfaces (friction surfaces) is increased, thus creating an effect that facilitates stronger feedback with respect to human sensory functions.

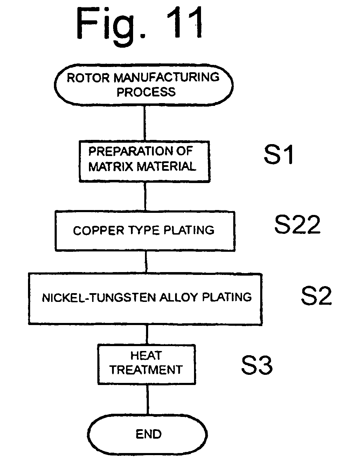

Fig. 11 is a flow chart illustrating the manufacturing process for the disk rotor 22 shown in Fig. 10. The process is the same as that shown in Fig. 7 for the first embodiment, except a copper-type plating treatment is added in a step S22 following the preparation step S1 shown in Fig. 7.

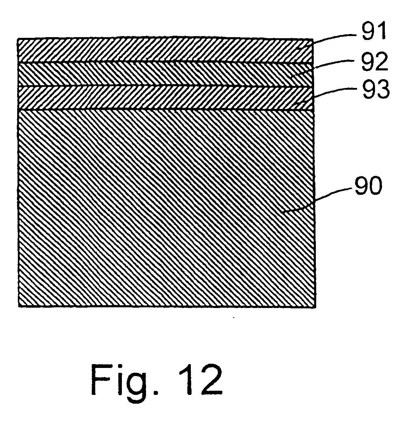

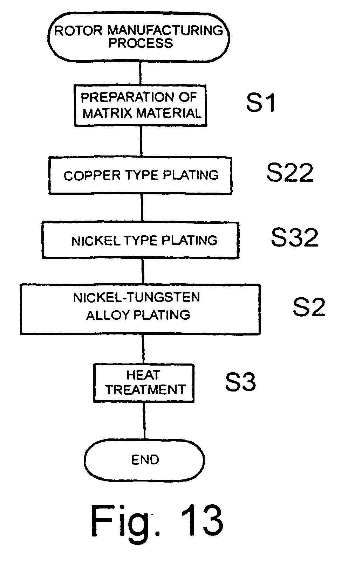

Fig. 12 is a cross-sectional view of another embodiment of a braking member such as disk rotor 22. As shown in Fig. 12, it would also be possible to form a nickel-type plating layer 92 on the surface of the copper-type layer 93, and to form a nickel-tungsten alloy layer 91 on the surface of this nickel-type layer 92. This produces a hardness gradient in addition to increased controllability. The manufacturing process for this embodiment is shown in Fig. 13.

In this process, a nickel-type plating treatment is added in step S32 following the copper-type plating treatment of step S22 in the manufacturing process shown in Fig. 11.

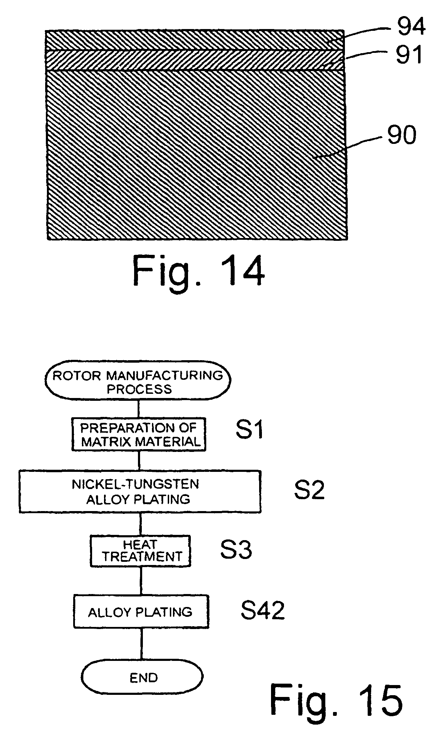

Fig. 14 is a cross-sectional view of another embodiment of a braking member such as disk rotor 22. As is shown in Fig. 14, a further layer 94 may be formed on the surface of the nickel-tungsten alloy layer 91. Layer 94 may be constructed from one or more metals (an alloy) selected from a group consisting of Sn, Cu, Zn, Ni, Ag, Fe, Al, P, Mn, Bi and Cr. However, since the selection of the further layer may vary according with the mating friction material, there are no particular restrictions on the layer here. Furthermore, fine particles of carbides, oxides, nitrides or the like may be included in the nickel-tungsten alloy layer and/or the further layer in order to improve the frictional wear characteristics.

Forming a further layer 94 on the surface of the nickel-tungsten alloy layer 91 produces a superior braking force even when the braking device is wet with water. The reason for this is unclear. However, the present inventors infer that the reasons may be as follows: A nickel-tungsten alloy plating is a plating with a strong tensile stress. Accordingly, countless cracks are formed in the plating surface of the surface layer part as a result of the difference in stress between this plating and the matrix material. When this plating is covered from above with a further layer that has a high covering effect, these cracks are repaired so that there is an effect that improves the water resistance and water-repellent properties on the microscopic level. On the other hand, it is possible that some type of hydrophilic effect might be present in the nickel-tungsten alloy plating, thus promoting the formation of a water film that results in a sliding action over this water film and a reduction in braking force. The further layer might impede such a water film forming mechanism. On the other hand, the use of a further layer as the interface, particularly an alloy type plating, might result in an effect that promotes friction with the mating material, thus creating an effect that causes rapid adaptation to friction with the mating material in the case of wetting with water. Yet another possible reason is that corrosive wear products produced by a reaction with water as a result of friction in the case of wetting with water have a good effect in improving the braking force.

Moreover, in the case of a nickel-tungsten alloy plating alone, discoloration and corrosion tend to occur when the braking device is used outdoors or in seashore areas. However, if this plating is covered by a further plating as noted above, the progression of discoloration and corrosion can be inhibited.

Fig. 15 is a flow chart illustrating a manufacturing process for the braking member shown in Fig. 14. The process is the same as the process described in Fig. 7, except further plating treatment is added in a step S42 following the heat treatment process of step S3. Of course, a further plating treatment may be added following the heat treatment process of step S3 in the embodiments shown in Figs. 9, 11 and 13.

In order to demonstrate the effects and merits of the present invention, the present inventors prepared various types of disk rotors with the test numbers described below, and the following four types of tests were performed on each rotor: 1) a steep slope braking test; 2) a wet braking test; 3) a corrosion resistance test; and 4) a controllability test. A bicycle having a commercially marketed disk braking device was used in the tests. The disk rotors were disk-shaped rotors made of an SUS410 stainless steel alloy. The rotors had a diameter of 200 mm and a thickness of 2 mm. The disk rotors with test numbers 1 through 14 were examples of disk rotors constructed according to the teachings of the present invention in which a nickel-tungsten alloy layer was formed, and disk rotors with test numbers 15 through 19 were comparative examples that had no plating layer or no nickel-tungsten alloy plating layer. Commercially marketed brake pads consisting of a copper-type sinter were used as the brake pads. The heat treatment was performed for 30 minutes at 500°C using a vacuum furnace following the formation of the nickel-tungsten alloy plating layer and prior to the formation of any further Sn-Ni alloy layer.

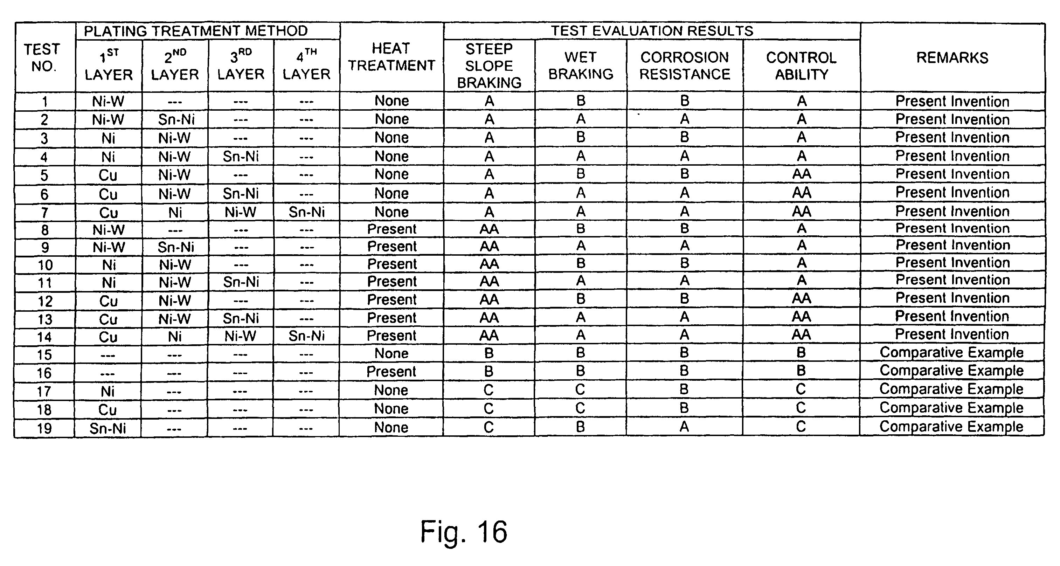

In the table shown in Fig. 16, the "first layer" refers to the layer directly above the matrix material, and the "second layer", "third layer" and "fourth layer" respectively refer to layers that are located successively closer to the friction surface. In the disk rotors with the test numbers 1 through 14, representing examples of the present invention, an Ni-W (nickel-tungsten) plating layer with a thickness of 10 µm consisting of approximately 45% Ni and approximately 55% W (wt % in all cases) was formed as one of the first through third layers. Furthermore, a Ni plating layer constituting a nickel-type plating layer was formed to a thickness of 10 µm by an electroplating process in test numbers 3, 4, 7, 10, 11 and 14. Moreover, an Sn-Ni plating layer constituting the further alloy layer was formed to a thickness of 1 µm by a pyrophosphate bath process in test numbers 2, 4, 6, 7, 9, 11, 13 and 14. A Cu layer was formed to a thickness of approximately 5 µm by a sulfuric acid bath process in test numbers 5-7 and 12-14.

In the steep slope braking test, the gradient in the running direction of the test course was set at approximately 10%. In the case of the dry test course, a distance of 1000 m was covered while braking was performed by means of the hand brake. Immediately afterward, the braking distance was calculated using the test method for dry conditions described in Japanese Industrial Standard (JIS) D 9201. The evaluation of the steep slope test was performed as follows:
AA: Braking was possible over the entire test course during abrupt braking, and the braking force under dry conditions measured immediately afterward was less than 4 m.
A: Braking was possible over the entire test course during abrupt braking, and the braking force under dry conditions measured immediately afterward was 4 m or greater, but less than 6 m.
B: Braking became difficult in the latter half of the test course during abrupt braking, and the braking force under dry conditions measured immediately afterward was less than 6 m.
C: Braking became difficult in the latter half of the test course during abrupt braking, and the braking force under dry conditions measured immediately afterward was 6 m or greater.

In the wet braking test, the braking distance was calculated by the method described in JIS D 9201. The evaluation of the wet braking test was performed as follows:
A: Braking distance when wet with water less than 6 m.
B: Braking distance when wet with water 6 m or greater, but less than 8 m.
C: Braking distance when wet with water 8 m or greater.

In the corrosion resistance test, the test was performed for a test time of 24 hours using the CASS test method described in JIS H 8502 (Plating Corrosion Resistance Test Methods), and the conditions of corrosion were evaluated by visual inspection. The evaluation of the corrosion resistance test was performed as follows:
A: No corroded or discolored parts.
B: Almost no corroded or discolored parts.
C: Corroded or discolored parts visible.
D: Corroded or discolored parts visible over entire surface.

In the controllability test, a subjective evaluation test was performed using 120 bicycle test riders selected at random. A four-grade evaluation described on page 1044 of Jitensha Jitsubenran [Bicycle Experimental Handbook] (Fourth Edition) was performed using test number 15, in which a conventional disk rotor with no plating was mounted as a reference value. Furthermore, the comparative example of test number 15, which consisted of the prior art, was used as a reference value in the other tests as well. The evaluation performed in the controllabifity test was performed as follows:
AA: Extremely superior (evaluated as superior by 80% or more of the test riders).
A: Superior (evaluated as superior by 60% or more of the test riders, but fewer than 80% of the test riders).
B: Ordinary (evaluated as superior by 40% or more of the test riders, but fewer than 60% of the test riders).
C: Poor (evaluated as superior by fewer than 40% of the test riders).

As is clear from Fig. 16, in the case of test numbers 1 through 7, which were examples of the present invention in which no heat treatment was performed, a superior braking force was maintained throughout the entire test course during abrupt braking in the steep slope braking test. In the braking test performed immediately afterward, the braking distance was less than 6 m, indicating that no fading occurred. Furthermore, the braking surfaces showed no discoloration caused by braking, so that the braking devices were also desirable in terms of external appearance, and showed superior braking characteristics.

In the case of test numbers 8 through 14, which were examples of the present invention in which a heat treatment was performed, a superior braking force was maintained throughout the entire test course during abrupt braking in the steep slope braking test. Furthermore, in the braking test performed immediately afterward, the braking distance was less than 4 m, indicating that no fading occurred. The braking surfaces showed no discoloration caused by braking, so that the braking devices were also desirable in terms of external appearance, and showed superior braking characteristics.

On the other hand, in the case of test numbers 15 and 16, which were comparative examples, braking sometimes became difficult in the latter half of the test course during steep-slope braking in the steep slope braking test. In the braking test performed immediately afterward, the braking distance was less than 6 m, so no conspicuous fading was seen. However, the braking surfaces showed a brown discoloration indicating oxidation caused by braking, so that the braking devices were inferior in terms of external appearance. In the case of test numbers 17 through 19, which also were comparative examples, braking sometimes became difficult in the latter half of the test course during steep-slope braking in the steep slope braking test. Furthermore, in the braking test performed immediately afterward, the braking distance was 6 m or greater, so that fading was seen. The braking surfaces showed a brown discoloration indicating oxidation caused by braking, so that the braking devices were inferior in terms of external appearance.

It was found from these results that if a nickel-tungsten alloy plating layer is formed, the braking force tends not to drop even under harsh conditions where fading ordinarily occurs, so that a superior braking force can be obtained. Furthermore, especially in the braking devices that were subjected to a heat treatment, it was found that the braking distance was shortened even further, so that the effect was even more pronounced.

In the water wetting test, it was found that the braking distance was 6 m or greater but less than 8 m in the case of test numbers 1, 3, 5, 8, 10 and 12, which were examples of the present invention in which no alloy type plating layer was formed. These examples showed approximately the same level of performance as the comparative example of test number 15, which was used as a reference value. On the other hand, in the case of test numbers 2, 4, 6, 7, 9, 11, 13 and 14, which were examples of the present invention in which a further plating layer was formed on the surface, the braking distance was less than 6 m. Thus, these examples showed a wet braking performance surpassing that of the comparative example of test number 15, which was used as a reference value. In the case of test numbers 17 and 18, which were comparative examples, the braking distance was 8 m or greater, so these comparative examples were greatly inferior to the examples of the present invention. In the case of test numbers 16 and 19, the braking distance was 6 m or greater but less than 8 m, indicating that these examples were inferior to the examples in which an alloy type plating layer was formed.

In the corrosion resistance test, no corroded or discolored parts were seen in the case of test numbers 2, 4, 6, 7, 9, 11, 13 or 14, which were examples in which a further plating layer was formed. These examples thus showed a superior corrosion resistance, and were also desirable in terms of external appearance. Even in the case of test numbers 1, 3, 5, 8, 10 and 12, which are examples of the present invention in which no alloy type plating layer was formed, the results obtained were more or less at the same level as those of test number 15, which was used as a reference value. The area ratio of corroded and discolored parts was 0.02% or less (rating number 9.8 described in JIS H 8502). Thus, almost no corroded or discolored parts were seen. It was found from this data that it is advisable to form a further plating layer on the surface in order to improve the corrosion resistance and wet braking performance.

In the controllability evaluation test, the test riders evaluating the control performance as superior accounted for 80% or more of the total responses in the case of test numbers 5 through 7 and 12 through 14, which were examples in which a copper type plating layer was formed. Thus, it was found that these examples showed an extremely superior control performance. Furthermore, even in the case of test numbers 1 through 4 and 8 through 11, which were examples in which no copper type plating layer was formed, the test riders evaluating the control performance as superior accounted for 60% or more but less than 80% of the total responses. Thus, it was found that these examples showed a superior control performance. On the whole, a superior control performance was obtained in the examples of the present invention.

On the other hand, in the case of the comparative examples, the braking device of test number 16 was evaluated as superior by 40% or more but fewer than 60% of the test riders. This comparative example showed a level of performance comparable to that of test number 15 (used as a reference value), and was therefore found to have an ordinary level of controllability. The braking devices of test numbers 17 through 19, which were comparative examples, were evaluated as superior by fewer than 40% of the test riders. Furthermore, there were numerous comments indicating that these braking devices lacked a sense of touch and showed poor responsiveness. Accordingly, the controllability of these braking devices was judged to be poor. It was found from these results that the controllability is improved by forming a copper-type plating layer on the surface of the matrix material.

The braking device of test number 1, in which a nickel-tungsten alloy plating layer was formed directly on the surface of the matrix material, the braking device of test number 3, in which a nickel-tungsten alloy plating layer was formed following the formation of a nickel type plating layer on the surface of the matrix material, and the braking device of test number 15, which was used as a conventional example, were mounted on respective bicycles, and a braking test was performed over a running distance of 200 km to test the peeling strength of the plating layers. The surface roughness showed almost no change in the braking device of test number 3. In the case of the braking device of test number 1, the surface roughness showed a slight change, and a slight indentation thought to indicate peeling of the plating was seen in some areas. By contrast, in the case of the braking device of test number 15, circumferential wear scars were observed on the surface. It was confirmed from these results that durability is improved by including a nickel-type layer. Furthermore, the amount of wear on the brake pads was less in the bicycles mounting test numbers 1 and 3, which were examples of the present invention, than in the bicycles mounting test number 15.
In this braking device, a nickel-tungsten alloy plating layer is formed on at least the friction surface of the first member or the friction surface of the second member. Accordingly, the braking force tends not to drop even under harsh conditions of 400°C to 700°C, where fading ordinarily occurs. Consequently, the braking device can show a superior braking force.

The reason that the braking force tends not to drop in a braking member constructed according to the present invention is unclear. However, one possible reason is as follows: The coefficient of friction µ may be cited as a physical value that generally governs the braking force. This coefficient of friction µ is reportedly proportional to the shear strength and inversely proportional to the hardness. Here, the "hardness" refers to the hardness of the matrix material, and the "shear strength" refers to the shear strength of the surface layer that provides the interface. Generally, in the case of hard substances such as metals or the like, the hardness or shear strength tends to drop as the temperature rises, so that the coefficient of friction µ usually tends to remain constant or to drop. In the case of the nickel-tungsten alloy layer disclosed in the present invention, it is surmised that the coefficient of friction µ may rise as a result of a synergistic effect between the drop in the hardness of the matrix material and the increase or maintenance of a constant value of the shear strength at high temperatures.

Generally, it is a well-known property of nickel-tungsten alloy plating that the hardness of the plating rises when the temperature rises. However, the present invention focuses on the shear strength of the nickel-tungsten alloy plating itself, and/or the shear strength of products produced by oxidation reactions when this plating is subjected to high-temperature friction, rather than on the hardness. It is surmised that a nickel-tungsten alloy plating layer has some type of mechanism that results in an additional increase in the shear strength when the plating layer is at a high temperature or is once exposed to a high temperature.

While the above is a description of various embodiments of the present invention, further modifications may be employed without departing from the spirit and scope of the present invention. For example, in the abovementioned embodiments, disk braking devices used in bicycles were indicated as examples of braking devices. However, the present invention can be applied to all types of braking devices that utilize a frictional force. For example, in the case of bicycle braking devices, the present invention can be applied to drum braking devices, roller braking devices, coaster braking devices, caliper braking devices, cantilever braking devices, band braking devices and the like. In the case of braking devices that brake the rim of the wheel, such as caliper braking devices, cantilever braking devices and the like, it is sufficient to form a nickel-tungsten alloy plating layer on the friction surfaces of either the rim or the shoes, or on the friction surfaces of both of these parts. In the case of band brakes and inside-spreading braking devices such as drum braking devices, roller brakes and the like, it is sufficient to form a nickel-tungsten alloy plating layer on the friction surfaces of either the brake drums or the brake bands or brake shoes that make frictional contact with the brake drums, or on the friction surfaces of both of these parts. In the case of coaster brakes, it is sufficient to form a nickel-tungsten alloy plating layer on the friction surfaces of either the hub shell or the brake shoes, or on the friction surfaces of both of these parts. The braking devices to which the invention of the present application is applied may also be braking devices used in two-wheeled vehicles other than bicycles, other vehicles such as automobiles, railroad cars and the like, and various types of machinery or the like.

In the abovementioned embodiments, a nickel-tungsten alloy plating layer was formed on the friction surfaces of a first member (disk rotor) that moved in linkage with a moving body (front wheel). However, it would also be possible to form a nickel-tungsten alloy plating layer on the friction surfaces of the second member (brake pads), or on the friction surfaces of both of these members.

In the abovementioned embodiments, the material of the disk rotor was a stainless steel alloy to promote corrosion resistance. However, the material of the disk rotor may be any metal selected from a group consisting of stainless steel alloys, iron (to reduce expense), aluminum alloys (reduced weight), magnesium alloys (reduced weight) and titanium alloys (reduced weight and corrosion resistance). Corrosion of a magnesium rotor may be inhibited using an additional protective layer. Furthermore, the disk rotor may also be made of a hard non-metallic material that possesses heat resistance, such as carbon, graphite or the like.

The size, shape, location or orientation of the various components may be changed as desired. Components that are shown directly connected or contacting each other may have intermediate structures disposed between them. The functions of one element may be performed by two, and vice versa. The structures and functions of one embodiment may be adopted in another embodiment. It is not necessary for all advantages to be present in a particular embodiment at the same time. Every feature that is unique from the prior art, alone or in combination with other features, also should be considered a separate description of further inventions by the applicant, including the structural and/or functional concepts embodied by such feature(s). Thus, the scope of the invention should not be limited by the specific structures disclosed or the apparent initial focus on a particular structure or feature.

## Claims

1. A braking device (12) for braking a moving object by frictional force, the braking device (12) comprising:
a first member (22) for moving in conjunction with the object;
a second member (76) for braking said first member (22) by frictional force exerted between said first and said second members;
and a nickel-tungsten alloy layer formed on at least either the friction surface of said first member (22) or the friction surface of said second member (76)

2. The braking device (12) according to claim 1 wherein the nickel-tungsten layer (91) has a thickness of from approximately 0.5 mu m to approximately 100 mu m.

3. The braking device (12) according to one of the above claims wherein the nickel-tungsten alloy layer (91) directly contacts a matrix (90) of a member (22, 76).

4. The braking device (12) according to claim 1 further comprising a further metal layer (92) disposed between a matrix (90) of a member (22, 76) and the friction surface.

5. The braking device (12) according to claim 1 or 2 wherein a nickel layer (92) is disposed between a matrix (90) of a member (22, 76) and the nickel-tungsten alloy layer (91).

6. The braking device (12) according to claim 5 wherein the nickel-tungsten alloy layer (91) directly contacts the nickel layer (92), and wherein the nickel layer (92) directly contacts a matrix (90) of a member (22, 76).

7. The braking device (12) according to claim 4 wherein the further metal layer (92) is selected from the group consisting of Sn, Cu, Zn, Ni, Ag, Fe, Al, P, Mn, Bi and Cr.

8. The braking device (12) according to one of the above claims further comprising a copper layer (93) disposed between a matrix (90) of a member (22, 76) and the friction surface.

9. The braking device (12) according to claim 8 wherein the copper layer (93) is disposed between a matrix (90) of a member (22, 76) and the nickel-tungsten alloy layer (91).

10. The braking device (12) according to claim 9 wherein the nickel-tungsten alloy layer (91) directly contacts the copper layer (93), and wherein the copper layer (93) directly contacts the matrix (90) of a member (22, 76).

11. The braking device (12) according to claim 4 or claim 7 wherein the further metal layer (92) comprises an alloy of metals selected from the group consisting of Sn, Cu, Zn, Ni, Ag, Fe, Al, P, Mn, Bi and Cr.

12. The braking device (12) according to one of the above claims further comprising a nickel layer (92) disposed between a matrix (90) of a member (22, 76) and the friction surface.

13. The braking device (12) according to claim 12 wherein the nickel layer (92) is disposed between the copper layer (93) and the nickel-tungsten alloy layer (91).

14. The braking device (12) according to one of the above claims wherein the nickel-tungsten alloy layer (91) directly contacts the nickel layer (92), wherein the nickel layer (92) directly contacts the copper layer (93), and wherein the copper layer (93) directly contacts a matrix (90) of a member (22, 76).

15. The braking device (12) according to one of the above claims further comprising a further metal layer (94) plating to cover the nickel-tungsten layer (91).

16. The braking device (12) according to claim 1 wherein the member comprises a brake disk rotor (22) adapted to be mounted to a wheel (17) of a bicycle (10) so that the brake disk rotor (22) rotates integrally with the wheel (17).

17. The braking device (12) according to claim 16 wherein a matrix (90) of a member (22, 76) comprises a metal selected from the group consisting of a stainless steel alloy, iron, an aluminium alloy, a magnesium alloy, and a titanium alloy.

18. A method of manufacturing one of two co-operating braking members (22, 76) of a braking device (12) for braking a moving object by frictional force comprising the steps of:
providing a matrix (90) of the braking member (22, 76); and forming a nickel-tungsten alloy layer (91) above the matrix on the friction surface of at least one of the two co-operating braking members (22, 76).

## Patentansprüche

1. Bremsvorrichtung (12) zum Bremsen eines sich bewegenden Objekts durch eine Reibungskraft, wobei die Bremsvorrichtung (12) umfasst:
ein erstes Element (22) zur Bewegung in Verbindung mit dem Objekt;
ein zweites Element (76) zum Bremsen des ersten Elements (22) durch eine zwischen dem ersten und dem zweiten Element ausgeübte Reibungskraft;
und eine wenigstens entweder auf der Reibungsfläche des ersten Elements (22) oder der Reibungsfläche des zweiten Elements (76) ausgebildete Nickel-Wolfram-Legierungsschicht.

2. Bremsvorrichtung (12) nach Anspruch 1, wobei die Nickel-Wolfram-Legierungsschicht (91) eine Dicke von ungefähr 0,5 µm bis ungefähr 100 µm besitzt.

3. Bremsvorrichtung (12) nach einem vorhergehenden Ansprüche, wobei sich die Nickel-Wolfram-Legierungsschicht (91) in direktem Kontakt mit einer Matrix (90) eines Elements (22, 76) befindet.

4. Bremsvorrichtung (12) nach Anspruch 1, die desweiteren eine weitere Metallschicht (92) umfasst, die zwischen einer Matrix (90) eines Elements (22, 76) und der Reibungsfläche angeordnet ist.

5. Bremsvorrichtung (12) nach Anspruch 1 oder 2, wobei eine Nickelschicht (92) zwischen einer Matrix (90) eines Elements (22, 76) und der Nickel-Wolfram-Legierungsschicht (91) angeordnet ist.

6. Bremsvorrichtung (12) nach Anspruch 5, wobei sich die Nickel-Wolfram-Legierungsschicht (91) in direktem Kontakt mit der Nickelschicht (92) befindet und wobei sich die Nickelschicht (92) in direktem Kontakt mit einer Matrix (90) eines Elements (22, 76) befindet.

7. Bremsvorrichtung (12) nach Anspruch 4, wobei die weitere Metallschicht (92) aus der Gruppe bestehend aus Sn, Cu, Zn, Ni, Ag, Fe, Al, P, Mn, Bi und Cr ausgewählt ist.

8. Bremsvorrichtung (12) nach einem der vorhergehenden Ansprüche, die desweiteren eine zwischen einer Matrix (90) eines Elements (22, 76) und der Reibungsfläche angeordnete Kupferschicht (93) umfasst.

9. Bremsvorrichtung (12) nach Anspruch 8, wobei die Kupferschicht (93) zwischen einer Matrix (90) eines Elements (22, 76) und der Nickel-Wolfram-Legierungsschicht (91) angeordnet ist.

10. Bremsvorrichtung (12) nach Anspruch 9, wobei sich die Nickel-Wolfram-Legierungsschicht (91) in direktem Kontakt mit der Kupferschicht (93) befindet und wobei sich die Kupferschicht (93) in direktem Kontakt mit der Matrix (90) eines Elements (22, 76) befindet.

11. Bremsvorrichtung (12) nach Anspruch 4 oder Anspruch 7, wobei die weitere Metallschicht (92) eine Legierung von Metallen umfasst, die aus der Gruppe bestehend aus Sn, Cu, Zn, Ni, Ag, Fe, Al, P, Mn, Bi und Cr ausgewählt ist.

12. Bremsvorrichtung (12) nach einem der vorhergehenden Ansprüche, die desweiteren eine zwischen einer Matrix (90) eines Elements (22, 76) und der Reibungsfläche angeordnete Nickelschicht (92) umfasst.

13. Bremsvorrichtung (12) nach Anspruch 12, wobei die Nickelschicht (92) zwischen der Kupferschicht (93) und der Nickel-Wolfram-Legierungsschicht (91) angeordnet ist.

14. Bremsvorrichtung (12) nach einem der vorhergehenden Ansprüche, wobei sich die Nickel-Wolfram-Legierungsschicht (91) in direktem Kontakt mit der Nickelschicht (92) befindet, wobei sich die Nickelschicht (92) in direktem Kontakt mit der Kupferschicht (93) befindet, und wobei sich Kupferschicht (93) in direktem Kontakt mit einer Matrix (90) eines Elements (22, 76) befindet.

15. Bremsvorrichtung (12) nach einem der vorhergehenden Ansprüche, die desweiteren eine Metallschicht (94)-Plattierung zum Bedecken der Nickel-Wolfram-Schicht (91) umfasst.

16. Bremsvorrichtung (12) nach Anspruch 1, wobei das Element einen Bremsscheibenrotor (22) umfasst, der ausgelegt ist, um an einem Laufrad (17) eines Fahrrads (10) angebracht zu sein, so dass sich der Bremsscheibenrotor (22) integral mit dem Laufrad (17) dreht.

17. Bremsvorrichtung (12) nach Anspruch 16, wobei eine Matrix (90) eines Elements (22, 76) ein Metall, ausgewählt aus der Gruppe bestehend aus einer rostfreien Stahllegierung, Eisen, einer Alumiumlegierung, einer Magnesiumlegierung und einer Titanlegierung, aufweist.

18. Verfahren zur Herstellung eines von zwei zusammenwirkenden Bremselementen (22, 76) einer Bremsvorrichtung (12) zum Bremsen eines sich bewegenden Objekts durch eine Reibungskraft umfassend folgenden Schritte:
Bereitstellen einer Matrix (90) des Bremsenelements (22, 76) und Bilden einer Nickel-Wolfram-Legierungsschicht (91) oberhalb der Matrix auf der Reibungsfläche von wenigstens einem der zwei zusammenwirkenden Bremselemente (22, 76).

## Revendications

1. Dispositif de freinage (12) pour freiner un objet mobile par la force de frottement, le dispositif de freinage (12) comprenant :
un premier élément (22) pour se déplacer conjointement à l'objet ;
un second élément (76) pour freiner ledit premier élément (22) par la force de frottement exercée entre lesdits premier et second éléments ;
une couche d'alliage de nickel - tungstène formée sur au moins la surface de frottement dudit premier élément (22) ou sur la surface de frottement dudit second élément (76).

2. Dispositif de freinage (12) selon la revendication 1, dans lequel la couche de nickel - tungstène (91) a une épaisseur d'approximativement 0,5 mµ m à approximativement 100 mµ m.

3. Dispositif de freinage (12) selon l'une des revendications ci-dessus, dans lequel la couche d'alliage de nickel - tungstène (91) est directement en contact avec une matrice (90) d'un élément (22, 76).

4. Dispositif de freinage (12) selon la revendication 1, comprenant en outre une autre couche métallique (92) disposée entre une matrice (90) d'un élément (22, 76) et la surface de frottement.

5. Dispositif de freinage (12) selon la revendication 1 ou 2, dans lequel une couche de nickel (92) est disposée entre une matrice (90) d'un élément (22, 76) et la couche d'alliage de nickel - tungstène (91).

6. Dispositif de freinage (12) selon la revendication 5, dans lequel la couche d'alliage de nickel - tungstène (91) est directement en contact avec la couche de nickel (92), et dans lequel la couche de nickel (92) est directement en contact avec une matrice (90) d'un élément (22, 76).

7. Dispositif de freinage (12) selon la revendication 4, dans lequel la couche métallique supplémentaire (92) est choisie dans le groupe comprenant Sn, Cu, Zn, Ni, Ag, Fe, Al, P, Mn, Bi, et Cr.

8. Dispositif de freinage (12) selon l'une quelconque des revendications ci-dessus comprenant en outre une couche de cuivre (93) disposée entre une matrice (90) d'un élément (22, 76) et la surface de frottement.

9. Dispositif de freinage (12) selon la revendication 8, dans lequel la couche de cuivre (93) est disposée entre une matrice (90) d'un élément (22, 76) et la couche d'alliage de nickel - tungstène (91).

10. Dispositif de freinage (12) selon la revendication 9, dans lequel la couche d'alliage de nickel - tungstène (91) est directement en contact avec la couche de cuivre (93), et dans lequel la couche de cuivre (93) est directement en contact avec la matrice (90) d'un élément (22, 76).

11. Dispositif de freinage (12) selon la revendication 4 ou la revendication 7, dans lequel la couche métallique supplémentaire (92) comprend un alliage de métaux choisis dans le groupe comprenant Sn, Cu, Zn, Ni, Ag, Fe, Al, P, Mn, Bi et Cr. 12. Dispositif de freinage (12) selon l'une des revendications ci-dessus, comprenant en outre une couche de nickel (92) disposée entre une matrice (90) et un élément (22, 76) et la surface de frottement.

12. Dispositif de freinage (12) selon l'une des revendications ci-dessus, comprenant en outre une couche de nickel (92) disposée entre une matrice (90) et un élément (22, 76) et la surface de frottement.

13. Dispositif de freinage (12) selon la revendication 12, dans lequel la couche de nickel (92) est disposée entre la couche de cuivre (93) et la couche d'alliage de nickel - tungstène (91).

14. Dispositif de freinage (12) selon l'une des revendications ci-dessus, dans lequel la couche d'alliage de nickel - tungstène (91) est directement en contact avec la couche de nickel (92), dans lequel la couche de nickel (92) est directement en contact avec la couche de cuivre (93), et dans lequel la couche de cuivre (93) est directement en contact avec une matrice (90) d'un élément (22, 76).

15. Dispositif de freinage (12) selon l'une des revendications ci-dessus, comprenant en outre un placage de couche métallique supplémentaire (94) pour recouvrir la couche de nickel - tungstène (91).

16. Dispositif de freinage (12) selon la revendication 1, dans lequel l'élément comprend un rotor (22) de disque de frein adapté pour être monté sur une roue (17) d'une bicyclette (10) de sorte que le rotor (22) de disque de frein tourne de manière solidaire avec la roue (17).

17. Dispositif de freinage (12) selon la revendication 16, dans lequel une matrice (90) d'un élément (22, 76) comprend un métal choisit dans le groupe comprenant un alliage d'acier inoxydable, le fer, un alliage d'aluminium, un alliage de magnésium et un alliage de titane.

18. Procédé de fabrication de l'un des deux éléments de freinage coopérants (22, 76) d'un dispositif de freinage (12) pour freiner un objet mobile par la force de frottement comprenant les étapes consistant à :
prévoir une matrice (90) de l'élément de freinage (22, 76) ; et former une couche d'alliage de nickel - tungstène (91) au dessus de la matrice sur la surface de frottement d'au moins l'un des deux éléments de freinage coopérants (22, 76).
